# EUROPEAN PATENT APPLICATION

(11) **EP 2 146 383 A2**
(43) Date of publication of application: **20.01.2010**
(21) Application number: 09009176.0
(22) Date of filing: 14.07.2009
(51) Int. Cl.: H01L 31/048, H02G 3/08

(54) **Building integrated photovoltaic (BIPV) junction box**

(30) Priority: 18.07.2008 CN 200820125900 U
(71) Applicant: Tyco Electronics (Shanghai) Co., Ltd., Shanghai (CN)
(72) Inventor: Ji, Wanqin, Shanghai (CN); Wu, Hui-Meng, Shanghai (CN); Wang, Dong, Shanghai (CN)
(74) Representative: Klunker . Schmitt-Nilson . Hirsch

(57) **Abstract**

The present invention provides a building integrated photovoltaic (BIPV) junction box comprising: a housing and a connection assembly disposed within the housing, the housing including two first sidewalls opposite to each other, second sidewalls connecting said two first sidewalls, and an opening side and a bottom wall connecting said first and second sidewalls, wherein the first sidewalls have extension parts beyond the height of the second sidewalls, so that an edge of a solar cell panel is sandwiched between the extension parts when the junction box is mounted on the edge of the solar cell panel. The BIPV junction box of the present invention may be applied to the connection of BIPV solar cell modules.

## Description

### FIELD OF THE INVENTION

The present invention relates to a building integrated photovoltaic (BIPV) device, and more particularly, to a junction box for BIPV glass panel.

### BACKGROUND OF THE INVENTION

Solar energy is recyclable energy. The technology of converting the solar energy to electrical energy has attracted much attention of the public in recent years since it can save energy, lessen the short of power supply, and reduce environment pollution.

A typical way of utilizing the solar energy is that a solar cell assembly (or photovoltaic assembly) is mounted via supports on a roof that has been built, and junction boxes used for the solar cell assembly are generally provided on the back surface of the assembly.

Recently, a novel technology of utilizing the solar energy, i.e., building integrated photovoltaic (BIPV) technology, has been developed. The technology uses solar energy (photovoltaic) devices as parts of a building, such as transparent roofs, windows or glass walls. Such photovoltaic devices can keep out wind and rain and transmit sunlight while generating electricity. However, the conventional junction boxes for solar cell modules are unharmonious and inaesthetic when they are mounted on windows or the like, since they have large volumes.

One solution in the prior arts is to hide connecting assembles in window frames or the like without using the junction box. However, without protection of the junction boxes, the connecting assembles are susceptible to external impacts, humidity and dusts.

### SUMMARY OF THE INVENTION

One object of the invention is to provide a junction box for a BIPV device, which can protect a diode assembly well without deteriorating appearance of a building having the BIPV device.

According to the present invention, a building integrated photovoltaic (BIPV) junction box is provided, which comprises a housing and a connection assembly disposed within the housing, wherein the housing includes two first sidewalls opposite to each other, second sidewalls connecting said two first sidewalls, and an opening side and a bottom wall connecting said first and second sidewalls, and wherein the first sidewalls have extension parts higher than the second sidewalls, so that an edge of a solar cell panel is sandwiched between the extension parts when the junction box is mounted on the edge of the solar cell panel.

In a preferred embodiment of the present invention, the extension parts of the first sidewalls are located at the opening side, the bottom wall is opposite to the opening side, and there is at least one opening at the opening side.

In a preferred embodiment of the present invention, the opening side is apart from the extension parts of the first sidewalls, the bottom wall is opposite to the opening side, and the opening side is closed by a closing cover.

In a preferred embodiment of the present invention, the extension parts comprise at least a pair of jaws.

In a preferred embodiment of the present invention, each of the jaws has a hook formed on an inner surface at a distal end thereof.

In a preferred embodiment of the present invention, at least one of the second sidewalls has a through hole therein, which allows an external cable to penetrate the housing and be connected to the connection assembly in the housing.

In a preferred embodiment of the present invention, the bottom wall has through holes allowing leads of the solar cell panel to pass through.

In a preferred embodiment of the present invention, the junction box further comprises a cylinder-shaped cable socket formed on an outer surface of at least one of the second sidewalls, wherein the cylinder-shaped cable socket has therein a pin that extends in an axial direction of the cable socket and penetrates the at least one of the second sidewalls hermetically to be connected to the connection assembly.

In a preferred embodiment of the present invention, the connection assembly comprises conductive rails and spring clamps for electrically connecting and fixing external cables and leads of the solar cell panel, respectively.

In a preferred embodiment of the present invention, the connection assembly further comprises an insulating chassis for holding the conductive rails and the spring clamps.

In a preferred embodiment of the present invention, the connection assembly further comprises a bypass diode for overcurrent protection, which is connected in series or in parallel with the solar cell panel via leads of the solar cell panel.

In a preferred embodiment of the present invention, components of the connection assembly are arranged in a line for saving room.

In a preferred embodiment of the present invention, at least one of the spring clamps has a back thereof face one of the first sidewalls of the housing.

In a preferred embodiment of the present invention, the connection assembly comprises two sub-assemblies each comprising one conductive rail and a plurality of spring clamps, the two sub-assemblies are the same as each other and are rotationally symmetrical with respect to a central axis of the housing perpendicular to the bottom wall of the housing.

The BIPV junction box according to the invention is compact and thin, so that it can be hidden in a window frame completely while providing sufficient protections for components such as bypass diode. Further, the BIPV junction box according to the invention is easy to be replaced and repaired.

### BRIEF DESCRIPTION OF THE DRAWINGS

Fig. 1 is a partial section view of a BIPV junction box, being connected with an external cable, according to a first embodiment of the present invention;

Fig. 2 is a perspective view of a housing of the junction box according to the first embodiment of the present invention;

Figs. 3A and 3B are a perspective view and a front view of a connection assembly according to the first embodiment of the present invention, respectively;

Figs. 4A and 4B are a perspective view and a front view of a spring clamp according to the present invention, respectively;

Figs. 5A and 5B are perspective views showing assemblies consisting of spring clamps and conductive rails according to the first embodiment and a second embodiment of the present invention, respectively;

Fig. 6 is a side view schematically showing the junction box according to the first embodiment of the present invention in a state of being mounted on a BIPV glass panel;

Figs. 7A and 7B are partially sectioned perspective and front views, respectively, showing the structure of a junction box according to the second embodiment of the present invention;

Fig. 8 is a side view showing the junction box according to the second embodiment in a state of being mounted on an edge of a solar cell panel, in which hooks at ends of jaws of the junction box are engaged with a plastic rim extending and disposed along the edge of the solar cell panel; and

Figs. 9A and 9B are partially sectioned perspective and front views, respectively, showing the structure of a junction box according to a third embodiment of the present invention.

### DETAILED DESCRIPTION OF THE PREFERRED EMBODIMENTS

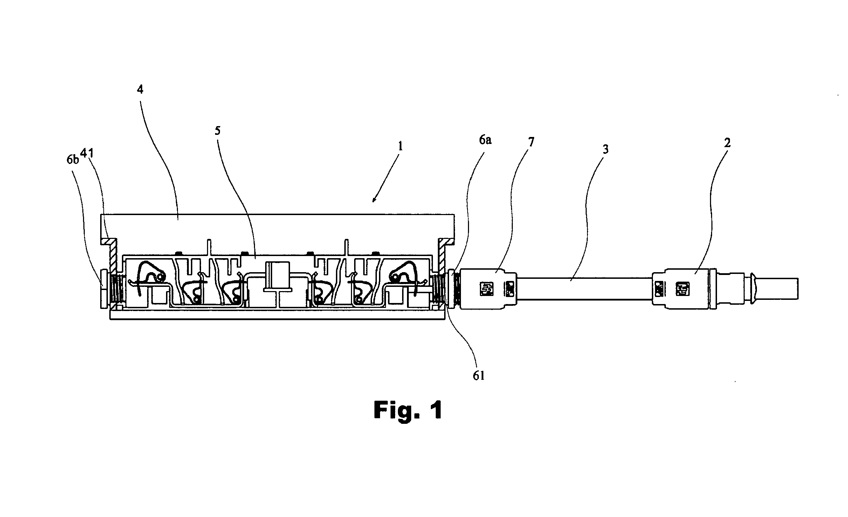

Fig. 1 is a partial section view showing a BIPV junction box 1 according to the first embodiment of the present invention, in which some of sidewalls of a housing 4 of the junction box 1 is removed to show the inner structure of the junction box 1. The junction box 1 shown in Fig. 1 has one end connected with an external cable 3 and the other end sealed by a blocking bolt 6b. The junction box 1 may include the housing 4 and a connection assembly 5 disposed within the housing 4. The connection assembly 5 may be used to connect leads of solar cell modules, external cables and bypass diodes, etc.

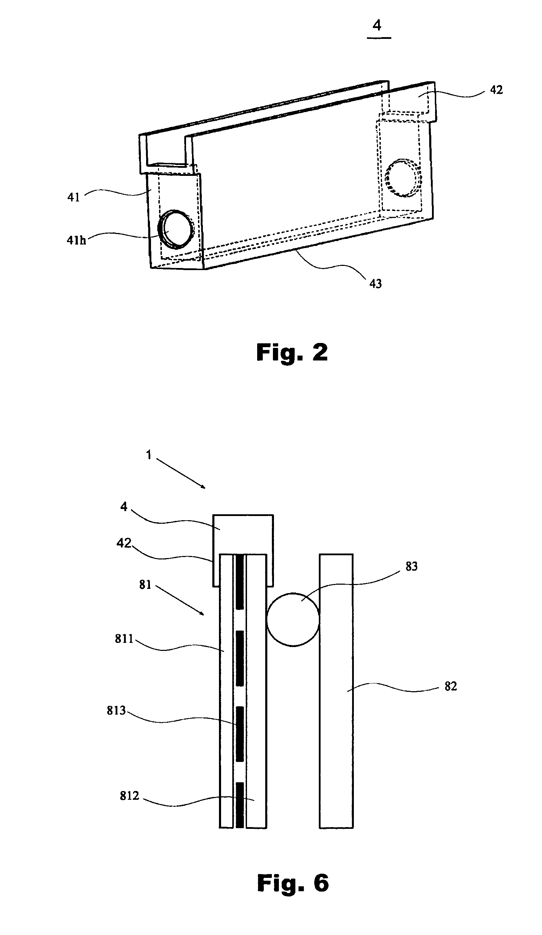

With reference to Fig. 2, the housing 4 in the first embodiment of the present invention may have a shape of rectangular parallelepiped box in general, which has a closed bottom and an opened top. Through holes 41h are formed in sidewalls 41 at both ends of the housing 4, so that the external cable 3 may be connected to the connection assembly 5 through one of the through holes 41h. Sidewalls 42 of the housing 4 extending in a lengthwise direction of the housing 4 have extension parts higher than the sidewalls 41, and the distance between the opposite extension parts may be consistent with the thickness of an edge portion of a solar cell panel for installing the junction box thereon so that the edge portion of the solar cell panel may be sandwiched between the opposite extension parts when the junction box 1 is mounted. Optionally, each of the sidewalls 41 may have a folded part at the top side thereof far away from a bottom wall 43, which may extend outwards in the lengthwise direction of the housing 4. In this case, the extension parts of the sidewalls 42 preferably extend in the lengthwise direction of the housing to outer edges of the folded parts of the sidewalls 41. The folded parts of the sidewalls 41 may increase contact area between the junction box 1 and the edge of the solar cell panel, and thus enhance the mounting stability and the sealing effect. However, the folded parts at the top sides of the sidewalls 41 are not indispensable, and the designs of the extension parts of the sidewalls 42 may be varied, for example the edges of the extension parts may be curved, as long as the inner space of the housing can be closed when the housing 4 is mounted to the edge portion of the solar cell panel. In a preferred embodiment of the present invention, the two sidewalls 42 of the housing 4 may be parallel to each other corresponding to the parallel configuration of opposite surfaces of the solar cell panel. However, the shape of the housing 4 may be varied in accordance with the shape of the solar cell panel so long as the configuration of the sidewalls of the housing 4 allows the hermetic attachment of the housing to the surfaces of the solar cell panel. The housing 4 may be made of insulating material.

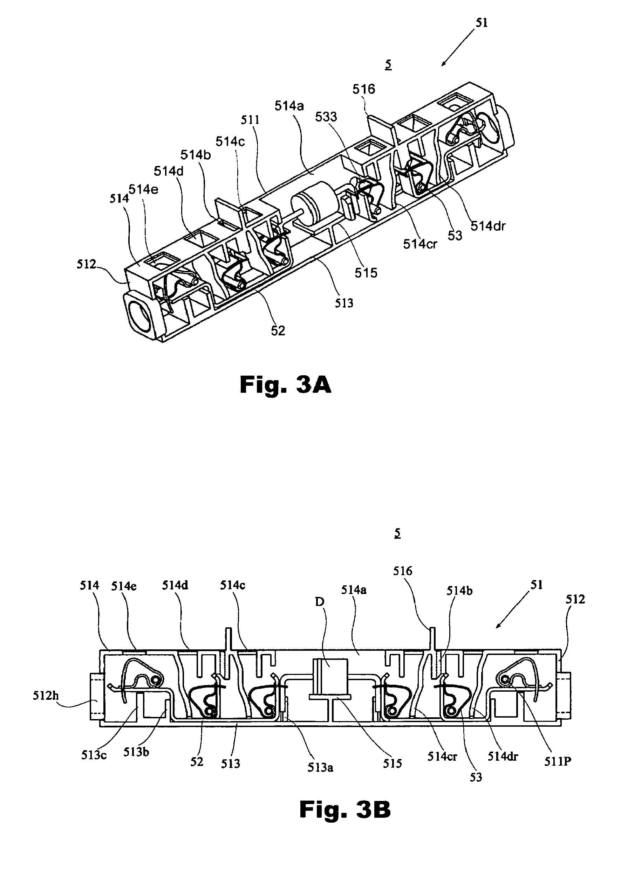

Referring to Figs. 3A and 3B, the connection assembly 5 in the housing 4 comprises a chassis 51 and two assemblies consisting of conductive rails 52 and spring clamps 53 installed in the chassis 51.

The chassis 51 has a sidewall 511 extending in a lengthwise direction of the chassis, and is opened at the opposite side to the sidewall 511 so as to facilitate the installation of the conductive rails, the spring clamps and the like in the chassis. Sidewalls 512 at both ends of the chassis 51 may have screw holes 512h therethrough (the threads of which are not shown in Figs. 3A and 3B), which may also serve as passages for components i.e., passages for inserting the external cables 3 into the housing. Ribs 513a, 513b and 513c extending from a bottom wall 513 toward a top wall 514 may be provided symmetrically on two sides of the chassis 51, wherein the ribs 513a and 513b may function to limit the positions of the conductive rails 52, and the rib 513c may be used to limit the drooping of overhang portions of the conductive rails 52 due to external force. The top wall 514 of the chassis 51 has a component passage 514a formed in the center thereof, and component passages 514b and actuator passages 514c, 514d and 514e symmetrically disposed at two sides of the component passage 514a with respect to the component passage 514a. The actuator passages allow the insertion of a tool for pressing the spring clamps, so that the spring clamps can be opened. Each of the spring clamps 53 has a mouth 533 facing a corresponding passage. In order to assist the tool for pressing the spring clamps to press the spring clamps, the actuator passages 514c and 514d preferably have inclined guiding ribs 514cr and 514dr extending from the top wall at respective openings thereof toward the bottom wall 513 and the corresponding spring clamps 53.

In the first embodiment of the present invention, a bypass diode D is installed into the chassis 51 through the component passage 514a. In this case, it is preferred that there is a supporter 515 on the bottom wall 513 corresponding to the component passage 514a, so that the lowest position of the diode D in the chassis can be limited when it is inserted into the chassis 51.

In a preferred embodiment of the present invention, the leads of the solar cell panel are inserted into the chassis 51 through the component passages 514b. Optionally, isolation ribs 516 may be formed on the top wall 514 at edges of openings of the component passages 514b, which extend outwards and may assist to prevent the leads of the solar cell panel from contacting each other and shorting.

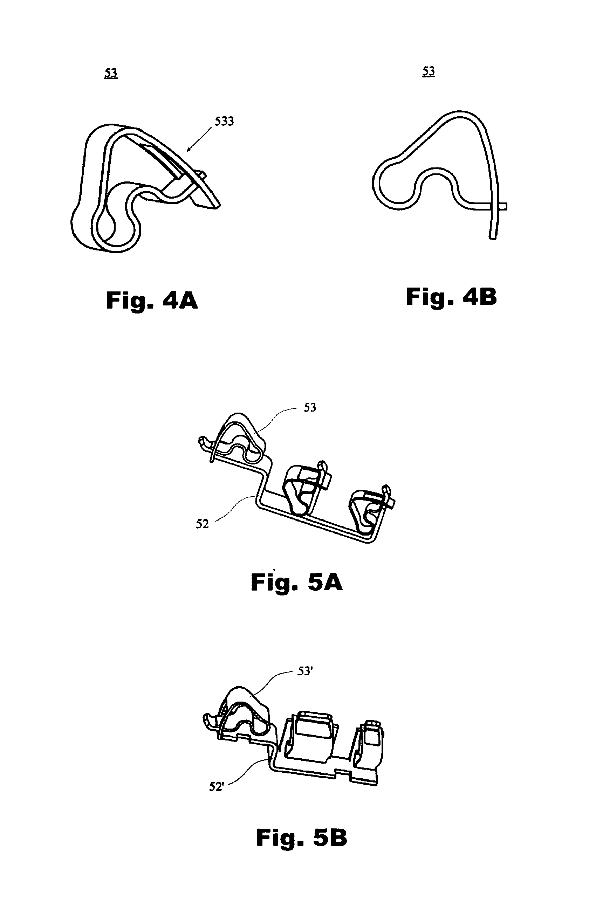

Referring to Figs. 4A and 4B, there is shown the structure of the spring clamp 53. The spring clamps 53 of the present invention may have different dimensions from each other according to practice. When assembling the connection assembly 5, the spring clamps 53 are opened and then clamp corresponding spring-mounting parts of the conductive rails 52, as shown in Fig. 5A; after assembling the spring clamps and the conductive rails together, the assemblies of the spring clamps and the conductive rails are installed in the chassis 51, such that posts 511p formed on the sidewall 511 of the chassis 51 are inserted into tails of the spring clamps to assist the restriction of the positions of the spring clamps, as shown in Figs. 3A and 3B.

The two assemblies of the conductive rails and spring clamps shown in the drawings may have the same structure, and one of the two assemblies of the conductive rails and spring clamps is rotated by 180° with respect to the other in installation. That is, the two assemblies are rotationally symmetrical with respect to a central axis of the chassis 51 which is perpendicular to the bottom wall of the chassis.

In a preferred embodiment of the present invention, the chassis 51 may be made of heat resistance insulating material such as PEI; and the conductive rail 52 and the spring clamp 53 may be made of conductive material such as metal.

Referring to Fig. 1 again, after the connection assembly 5 is mounted within the housing 4, one end of a double-ended screw joint 6a is fitted in the screw hole 512h of the chassis 51 of the connection assembly 5 through the through-hole 41h of the housing 4. Preferably, an O-ring 61 is placed between a flange in the middle of the double-ended screw joint 6a and the sidewall 41 of the housing 4 to prevent dusts and moisture from entering into the inner space of the junction box through the through-hole 41h. The blocking bolt 6b may be fixed in a way same as the double-ended screw joint 6a. Alternatively, the junction box 1 may also be connected with external cables 3 at both ends thereof according to practice. In this case, the blocking bolt 6b is replaced by a double-ended screw joint 6a.

Next, the use of the junction box will be described. Briefly, the tool for pressing the spring clamps is inserted via the passage 514c, 514d or 514e to press and open one of the spring clamps 53; and at the same time, the bypass diode D, a lead of the solar cell module or a cable is inserted via the passage 514a, the passage 514b, or the screw hole 512h, so that one of the terminals of the diode D or other lead is disposed in the mouth 533 (see Fig. 3A) of the spring clamp between a corresponding spring-mounting part of the conductive rail 52 and an edge of the mouth 533. Then, the tool is withdrawn, and the spring clamp 53 is restored to securely fix the terminal of the diode D or the other lead on the conductive rail 52 and achieve excellent electrical connection. Although the connecting of the bypass diode D, the lead of the solar cell module or the cable and the junction box is described as above, this description is only for the purpose of facilitating the understanding of the invention, and those skilled in the art can determine flexibly according to particular conditions the time to connect respective components or leads. For example, the diode D may be mounted after assembling the connection assembly 5, or after installing the connection assembly 5 into the housing 4 and fitting the double-ended screw joint 6a and the blocking bolt 6b into the screw holes 512h of the chassis 51, or mounted at the construction site; the cable 3 may be installed after installing the connection assembly 5 into the housing 4 and fitting the double-ended screw joint 6a and the blocking bolt 6b into the screw holes 512h of the chassis 51, or installed at the construction site; and the leads of the solar cell module may be mounted at the construction site.

Referring to Fig. 1 again, one end of the double-ended screw joint 6a exposed outside the housing 4 serves to mount a screw joint 7 of the cable. The cable 3 may has a distal end provided with a male or female connector 2 so that it can be connected to another cable.

Further, in the case that no external cable is necessary, both ends of the junction box 1 may be closed by the blocking bolts 6b. Alternatively, the sidewall(s) 41 may have no through-hole 41h (see Fig. 2) at one or two ends of the housing not connected with the cable 3. Also, the spring clamp adjacent to the sidewall 512 of the chassis 51 for connecting the cable 3 may be eliminated if the cable 3 is not connected to the junction box at the sidewall 512.

Next, the installation of the BIPV junction box 1 according to the first embodiment of the present invention will be described with reference to the schematic view of Fig. 6. The BIPV glass panel shown in Fig. 6 is a typical BIPV glass panel, which comprises a solar cell panel 81 and a glass plate 82 with an interval therebetween maintained by spacers 83. The solar cell panel 81 includes two glass plates 811 and 812 and a solar cell module 813 sandwiched between the glass plates 811 and 812. Fig. 6 shows that an edge portion of the solar cell panel is inserted and clamped between the two extension parts of the sidewalls 42 of the housing 4 of the junction box. Upon it is assembled, the junction box according to the first embodiment of the present invention may be mounted at the construction site. At the construction site, the leads (not shown) of the solar cell module 813 are connected to the connection assembly 5, and then an adhesive such as silica gel is coated on surfaces of the sidewalls of the housing 4 of the junction box 1 that will contact the edge portion of the solar cell panel 81. Next, the junction box 1 is placed on the edge of the solar cell panel 81 in such a manner that the opening of the housing 4 faces the solar cell panel 81, so that the edge portion is inserted between the two sidewalls 42 of the housing 4 in the lengthwise direction and a side surface of the solar cell panel 81 is in contact with the top of the sidewalls 41 of the housing 4, and thus the junction box 1 is adhered on the solar cell panel 81. As a result, the junction box 1 is hermetically mounted on the edge of the solar cell panel 81 with the adhesive of silica gel.

The BIPV junction box according to the present invention is not filled with sealant as done in the prior art, and thus it is easy and convenient for those skilled in the art to repair or replace fault components.

The BIPV junction box according to the present invention is mounted on the edge portion of the solar cell panel and has substantially the same thickness as that of the solar cell panel due to the design of the housing. As a result, the junction box can be hidden in the window frame easily, which achieves the object of providing good looks while effectively preventing the components therein from being damaged due to external impacts, dusts, and/or moisture.

Since the connection assembly of the BIPV junction box according to the present invention comprises spring clamps, the connection of leads or conductive wires is easy, quick, and fast, and the excellent electrical connection may be ensured.

The above embodiments are not to limit the scopes of the present invention, and those skilled in the art may make various changes of them. For example, instead of the separate double-ended screw joint 6a, a screw joint matching the screw joint 7 of the cable may be integrally formed on the sidewall 41 of the housing 4. In this case, although the manufacture of the housing 4 is complicated, the hermetical connection between the cable and the junction box becomes simpler and more reliable. Further, latch pairs may be formed on the chassis 51 and the sidewalls of the housing 4, so that the connection assembly 5 may be securely installed within the housing 4 via the latch pairs. In addition, those skilled in the art may modify the connection assembly 5 illustrated in the embodiments so long as it can connect leads or conductive wires reliably.

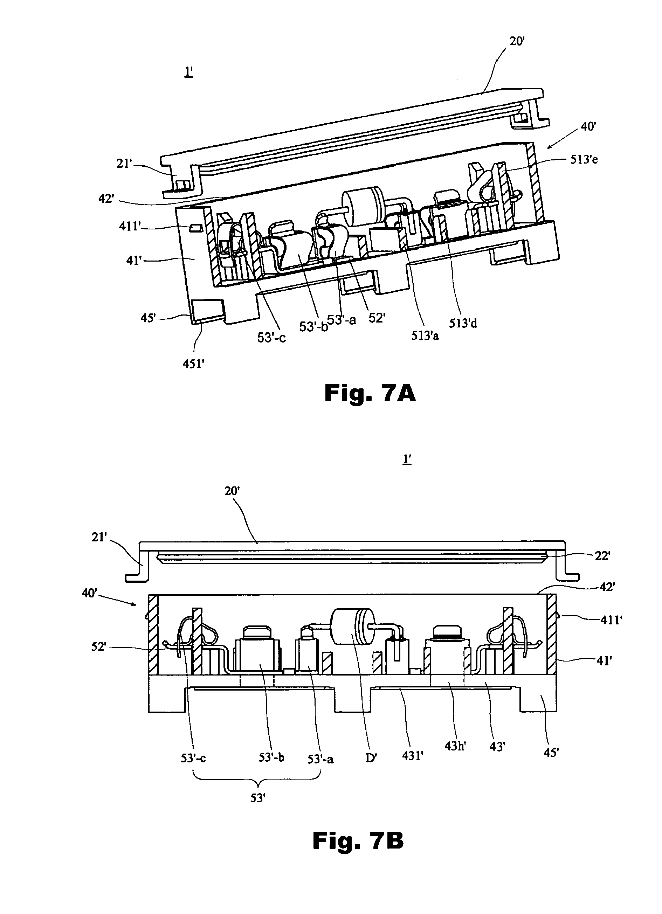

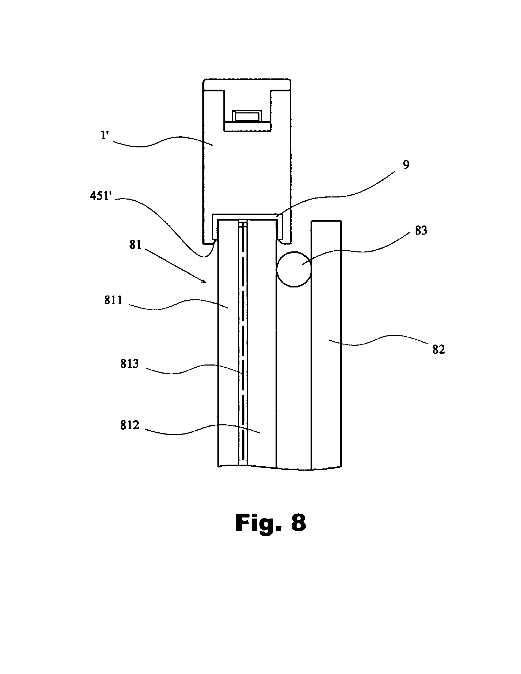

Hereinafter, a second embodiment of the present invention will be described with reference to Figs. 7A, 7B, and 8, in which components like those in the first embodiment are denoted by like reference numerals and their repetitive descriptions are omitted.

Figs. 7A and 7B are partially sectioned perspective and front views, respectively, showing the structure of a junction box according to the second embodiment of the present invention, in which some sidewalls of a main body 40' of a housing of junction box 1' are removed to exhibit the inner structure of the junction box 1'.

Referring to Figs. 7A and 7B, the BIPV junction box 1' according to the second embodiment of the present invention comprises an insulating housing and a connection assembly disposed in the housing.

The housing includes the main body 40' and a closing cover 20', which are in a state of to be assembled and are separated from each other in Figs. 7A and 7B.

The main body 40' has substantially a rectangular parallelepiped shape, and comprises two sidewalls 42' extending in a lengthwise direction, sidewalls 41' being connected with the two sidewalls 42' at ends of the sidewalls 42', and a bottom wall 43'. A plurality pairs of jaws 45' are disposed on the bottom of the main body 40' and extend downwards from the bottom wall 43' along a plane where the sidewall 42' lies, so that the main body 40' will be mounted on an edge of the solar cell panel 81 in such a manner that the bottom wall 43' faces the solar cell panel 81, which is contrary to the first embodiment. There may be one or more pairs of jaws 45' so long as they can clamp the edge of the solar cell panel. The main body 40' shown in Figs. 7A and 7B has three pairs of jaws 45'. Each of the jaws 45' may be provided with a hook 451' on the inward surface thereof at a distal end, which may be engaged with the plastic rim 9 extending and disposed along the edge of the solar cell panel 81 and having a "U" shaped cross section, as shown in Fig. 8. In this case, the plastic rim 9 is formed with holes (not shown) which allow the leads of the solar cell module to pass through. Alternatively, the hook 451' and the plastic rim 9 may be omitted, and in this case, the jaws 45' clamp the edge of the solar cell panel 81 and optionally are adhered thereto with adhesive. The bottom wall 43' may have two lead holes 43h', which allow the leads of the solar cell module to pass through and enter into the main body 40'. The sidewalls 41' and 42' are level with each other at the top opening of the main body 40', which is different from the first embodiment. Optionally, there may be ribs 513'a, 513'd and 513'e formed on the bottom wall 43' and connected with the sidewalls 42' inside the main body 40', which serve to position the connection assembly and/or strengthen the main body 40'. However, the ribs 513'a, 513'd, and 513'e are not indispensable and may be omitted entirely or partially, as long as the stiffness of the main body 40' meets the requirement for use and the position of the connection assembly may be kept constantly.

The closing cover 20' covers and closes the top opening of the main body 40' by the engagement of latch catches 21' at ends of the closing cover with protrusions 411' formed on outer surfaces of the sidewalls 41'. An O-ring 22' is disposed around a raised portion of the closing cover 20', which is formed on a side of the closing cover 20' facing the top opening of the main body 40', so that the sealing between the closing cover 20' and the main body 40' is achieved when the cover 20' is mounted on the main body 40'.

If no external cable is needed to be connected, the sidewalls 41' of the main body 40' may have no through hole therein, as shown in Figs. 7A and 7B. In this case, the junction box 1' can connect only the leads of the solar cell module among the external components. Optionally, in the case where no external cable is needed to be connected, spring clamps 53'-c among the spring clamps 53' closer to the sidewalls 41' for connecting external cables may be omitted.

Referring to Figs. 7A and 7B again, the connection assembly disposed in the main body 40' comprises two assemblies of conductive rails 52' and the spring lamps 53', but does not comprise the chassis 51 of the first embodiment. The two assemblies of the conductive rails 52' and the spring lamps 53' may be same as each other, and one of the assemblies is rotated by 180° with respect to the other about a central axis of the junction box 1' such that the two assemblies are rotationally symmetrical with respect to each other, in which the central axis is perpendicular to the bottom wall 43' of the main body 40'. As shown in Figs. 5B, 7A, and 7B, the assemblies of conductive rails and spring lamps in the second embodiment of the invention are substantially the same as those in the first embodiment except that the spring clamp 53'-b for clamping a lead of the solar cell module and the spring clamp 53'-a for clamping a lead of the bypass diode D among the spring clamps 53' are rotated by 90° with respect to those in the first embodiment to have the backs thereof face one of the sidewalls 42' of the main body 40'. Also, branches (spring-mounting parts) of the conductive rail 52' for mounting the spring clamps are rotated accordingly. In addition, a mouth of the spring clamp 53'-b for clamping a lead of the solar cell module may correspond to a lead hole 43h' in the bottom wall 43' of the main body 40'. The conductive rails 52' may be fixed within the main body 40' by adhering, clamping, or the like.

The junction box 1' of the second embodiment of the present invention may further comprise an O-ring 431' disposed on an outer surface of the bottom wall 43' and enclosing the lead holes 43h' in the bottom wall 43'. When the junction box 1' is mounted on the edge of the solar cell panel, the O-ring 431' is positioned between the bottom wall 43' and a surface of the solar cell panel at the edge facing the bottom wall 43', so that the sealing between the bottom wall 43' and the surface of the solar cell panel is achieved. In an alternative embodiment, the junction box 1' may have no O-ring 431' and the sealing function of the O-ring 431' can be achieved by use of a sealing adhesive.

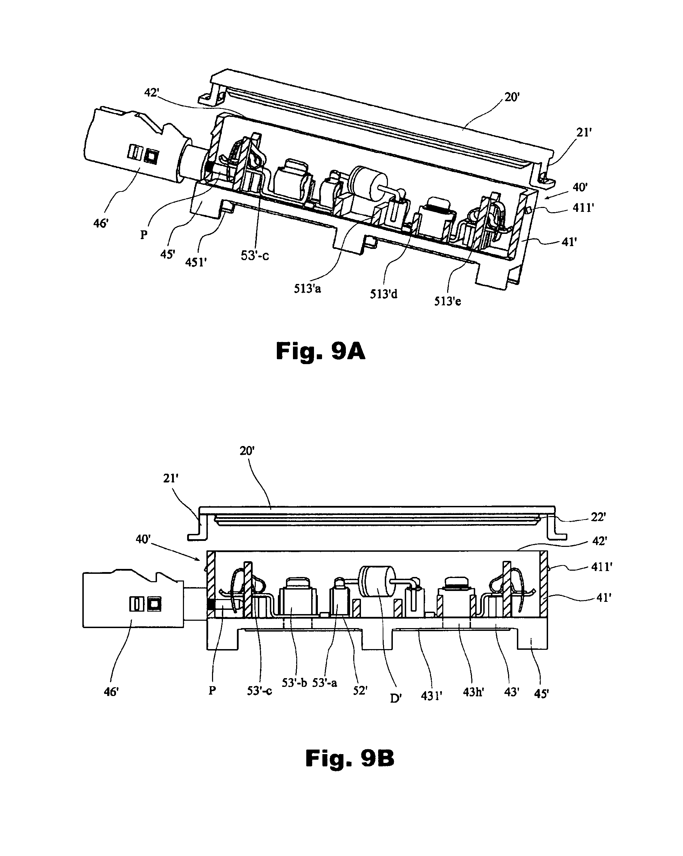

Figs. 9A and 9B are partially sectioned perspective and front views, respectively, showing the third embodiment of the present invention. Similar to Figs. 7A and 7B, some sidewalls of the main body 40' of the housing of the junction box are removed in Figs. 9A and 9B to exhibit the inner structure of the junction box. The junction box of the present embodiment may be connected to an external cable at one end thereof. The third embodiment shown in Figs. 9A and 9B is substantially the same as the second embodiment shown in Figs. 7A and 7B except that there is a cylinder-shaped cable socket 46' integrally formed with the main body 40' on an outer surface of the sidewall 41', wherein the sidewall 41' is at one end of the main body 40'. The cable socket 46' has therein a pin P that extends in an axial direction of the cable socket to penetrate the sidewall 41' hermetically and is connected to the connection assembly. The cable socket 46' is used to match with a plug of an external cable. Alternatively, the cable socket 46' may be fabricated separately, and then adhere to the sidewall 41'. It is certain that the cable socked 46' may be fixed to the sidewall 41' by means of other ways. In the case in which both ends of the junction box are connected with external cables, another cylinder-shaped cable socket 46' may be formed similarly on the other sidewall 41' of the junction box shown in Figs. 9A and 9B. The pin P in the cable socket 46' may penetrate the sidewall 41', and be inserted in the mouth of the spring clamp 53'-c among the spring clamps 53' located at the end of the main body 40' to be clamped by the spring clamp 53'-c.

The installation of the junction box according to the third embodiment may be similar to that according to the second embodiment of the present invention, and the repetitive description is omitted.

Although the exemplary embodiments of the present invention have been shown and described above, it will be appreciated by those skilled in the art that changes may be made to the embodiments without departing from the principles and spirit of the invention, and the scope of the invention is defined in the claims and their equivalents.

## Claims

1. A building integrated photovoltaic (BIPV) junction box, comprising:
a housing and a connection assembly disposed within the housing, the housing including two first sidewalls opposite to each other, second sidewalls connecting said two first sidewalls, and an opening side and a bottom wall connecting said first and second sidewalls,
wherein the first sidewalls have extension parts beyond the height of the second sidewalls, so that an edge of a solar cell panel is sandwiched between the extension parts when the junction box is mounted on the edge of the solar cell panel.

2. The junction box as claimed in claim 1, wherein the extension parts of the first sidewalls beyond the second sidewalls are at the opening side, the bottom wall is opposite to the opening side, and there is at least one opening at the opening side.

3. The junction box as claimed in claim 1, wherein the opening side is apart from the extension parts of the first sidewalls, the bottom wall is opposite to the opening side, and the opening side is closed by a closing cover.

4. The junction box as claimed in any one of claims 1-3, wherein the extension parts comprise at least a pair of jaws.

5. The junction box as claimed in claim 4, wherein each of the jaws has a hook formed on an inner surface at a distal end thereof.

6. The junction box as claimed in any one of claims 1-3, wherein the second sidewall has a through hole therein, which allows an external cable to penetrate the housing and be connected to the connection assembly in the housing.

7. The junction box as claimed in claim 3, wherein the bottom wall has through holes allowing leads of the solar cell panel to pass through.

8. The junction box as claimed in any one of claims 1-3, further comprising a cylinder-shaped cable socket formed on an outer surface of at least one of the second sidewalls, wherein the cylinder-shaped cable socket has therein a pin that extends in an axial direction of the cable socket and penetrates the at least one of the second sidewalls hermetically to be connected to the connection assembly.

9. The junction box as claimed in claim 1, wherein the connection assembly comprises conductive rails and spring clamps for electrically connecting and fixing external cables and leads of the solar cell panel, respectively.

10. The junction box as claimed in claim 9, wherein the connection assembly further comprises an insulating chassis for holding the conductive rails and the spring clamps.

11. The junction box as claimed in claim 1, wherein the connection assembly further comprises a bypass diode for overcurrent protection, which is connected in series or in parallel with the solar cell panel via leads of the solar cell panel.

12. The junction box as claimed in any one of claims 9-11, wherein components of the connection assembly are arranged in a row for saving room.

13. The junction box as claimed in claim 9, wherein at least one of the spring clamps has a back thereof face one of the first sidewalls of the housing.

14. The junction box as claimed in claim 9, wherein the connection assembly comprises two sub-assemblies each comprising the conductive rail and the spring clamps, the two sub-assemblies are the same as each other and are rotationally symmetrical with respect to a central axis of the housing perpendicular to the bottom wall of the housing.
